Europäisches Patentamt

European Patent Office

Office européen des brevets

(19)

(11) **EP 1 006 719 A1**

(12) **DEMANDE DE BREVET EUROPEEN**

(43) Date de publication:
   **07.06.2000   Bulletin 2000/23**

(51) Int Cl.⁷: **H04N 5/217**, H04N 5/32

(21) Numéro de dépôt: **99402949.4**

(22) Date de dépôt: **26.11.1999**

(84) Etats contractants désignés:
   **AT BE CH CY DE DK ES FI FR GB GR IE IT LI LU
   MC NL PT SE**
   Etats d'extension désignés:
   **AL LT LV MK RO SI**

(30) Priorité: **30.11.1998   FR 9815044**

(71) Demandeur: **Commissariat à l'Energie Atomique
   75752 Paris Cedex 15 (FR)**

(72) Inventeur: **Guillemaud, Régis
   38000 Grenoble (FR)**

(74) Mandataire: **Des Termes, Monique et al
   Société Brevatome
   3, rue du Docteur Lancereaux
   75008 Paris (FR)**

(54)   **Procédé de correction des défauts d'images issues d'un détecteur de rayons X ou gamma
de type matriciel**

(57)   L'invention concerne un procédé de correction
des pixels en défaut sur des images issues d'un détecteur de rayons X ou γ de type matriciel, consistant à
construire une carte de confiance à partir d'indices de
confiance continus, compris entre 0 et 1, et représentant
le niveau de confiance attribué à chaque pixel du détecteur. Il consiste ensuite à utiliser cette carte de confiance
pour corriger les défauts du détecteur matriciel.

FIG. 1

**Description**

Domaine de l'invention

L'invention concerne un procédé pour corriger les défauts d'une image provenant d'un détecteur de rayons X ou γ de type matriciel et, en particulier, pour corriger les pixels en défaut ou les pixels manquants de cette image, en attribuant à chaque pixel de l'image un indice de confiance compris entre 0 et 1.

L'invention trouve des applications dans tous les domaines utilisant des images numériques réalisées sous rayons X ou γ et, notamment, dans le domaine médical et le domaine dentaire, avec l'imagerie radiographique numérique à rayons X ou γ.

Etat de la technique

Dans le domaine de l'imagerie radiographique numérique à rayons X ou γ, le système utilisé est généralement un système standard d'acquisition d'images. Ce système peut comporter une source de rayonnements X ou γ (par exemple un tube X ou un détecteur X bidimensionnel, dans le cas de rayons X), qui fournit, à sa sortie, une image représentative de la quantité de photons X ou γ transmise à travers l'objet radiographié qui est placé entre la source et le détecteur. Dans certains cas, l'objet est lui-même source de rayons γ.

Cependant, les images ainsi acquises peuvent contenir un certain nombre de défauts, dont la plupart sont liés au détecteur. Ces défauts proviennent d'un ou de plusieurs pixels, appelés pixels en défaut, qui ont un comportement aberrant et fournissent, par conséquent, une valeur qui n'est pas liée à la quantité de photons X ou γ reçue en cette région du détecteur. Ces pixels en défaut peuvent également provenir de l'absence de mesure, c'est-à-dire que ces pixels en défaut constituent une zone de l'image où le détecteur n'a pas pu effectuer de mesure.

Par exemple, le détecteur de rayonnements X solide, décrit dans « Recent developments on a CdTe based X-ray detector for digital radiography », F. GLASSER et al., congrès SPIE Medical Imaging, 22/28 février 1997, et destiné à la radiographie dentaire numérique, est constitué d'un semi-conducteur CdTe connecté à quatre circuits CMOS disposés selon une matrice 2 x 2. La connexion entre le semi-conducteur et les circuits de lecture se fait au moyen de billes d'indium. Ces détecteurs présentent des défauts de deux types :

- des défauts aléatoires liés en particulier au semi-conducteur et aux connexions entre le semi-conducteur et le circuit de lecture ; et
- des lignes et des colonnes manquantes selon une forme de croix à la liaison entre les quatre circuits de lecture.

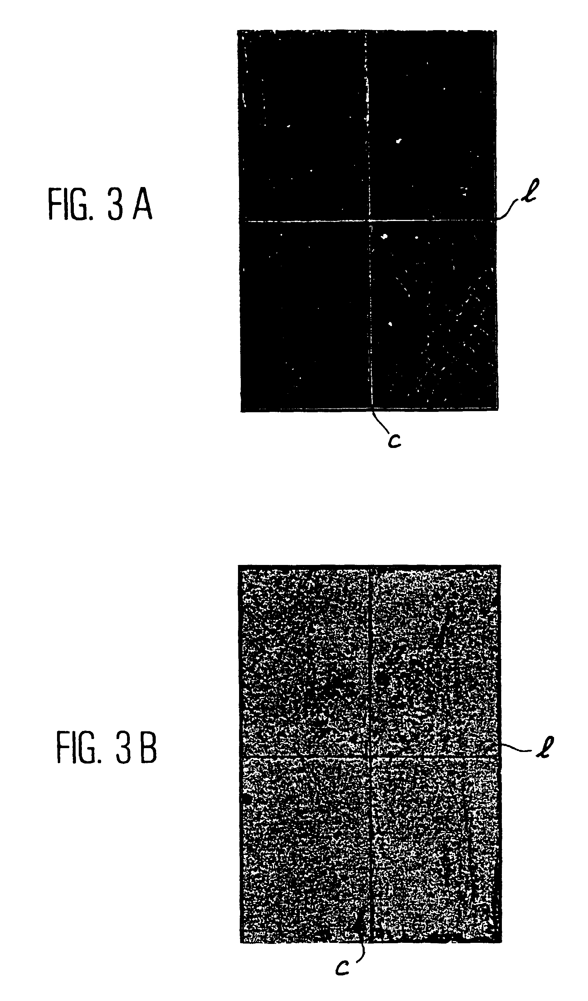

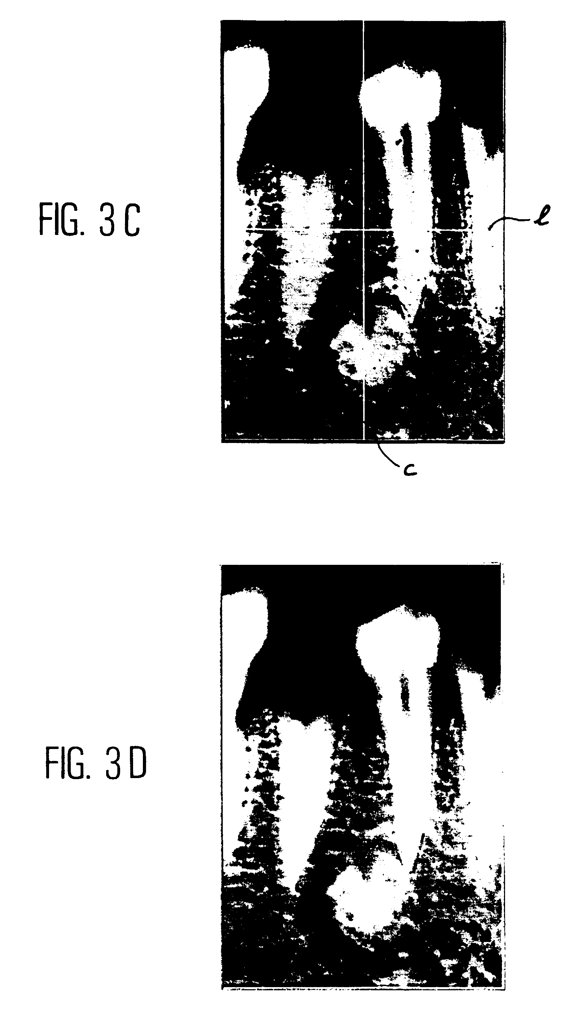

Les défauts de ce détecteur sont visibles, en particulier sur les figures 3A et 3C qui montrent, respectivement, l'image d'un objet connu et l'image d'une dent à étudier.

Il est évident que ces pixels en défaut nuisent à la qualité visuelle de l'image et donc à son exploitation. Il est donc nécessaire de détecter ces pixels et de corriger leurs valeurs.

Dans le cas où les pixels en défaut sont isolés, la correction de l'image est simple ; elle se fait par interpolation par rapport aux pixels voisins du pixel en défaut considéré.

Dans d'autres cas, ces pixels en défaut peuvent être regroupés et constituer des zones entières de l'image, ces zones pouvant être de dimensions assez grandes et de formes quelconques. Ces zones peuvent constituer, par exemple, une ligne ou une colonne, ou bien un ensemble de lignes ou de colonnes de pixels en défaut, ou encore un agglomérat de forme quelconque.

Il existe déjà des méthodes de correction d'un ensemble de pixels en défaut. Ces méthodes utilisent généralement une technique classique qui consiste en une détermination binaire des pixels en défaut, à partir du seuillage d'un critère. Le choix de ce critère est difficile ; en effet, si le seuil est choisi trop bas, des pixels en défaut risquent de ne pas être détectés ; s'il est choisi trop élevé, les zones de pixels en défaut seront déterminées comme plus étendues qu'elles ne le sont en réalité, ce qui rend plus difficile une correction correcte de ces pixels en défaut.

La difficulté de choix du critère entraîne donc une mise en oeuvre difficile de cette méthode. Par ailleurs, les résultats obtenus avec cette méthode sont peu fiables, puisqu'ils dépendent du critère choisi.

Exposé de l'invention

L'invention a justement pour but de remédier aux inconvénients de la méthode décrite précédemment. A cette fin, elle propose un procédé de correction des défauts d'images X ou γ, basé sur la construction d'une carte de confiance regroupant les indices de confiance (continus, compris entre 0 et 1) de tous les pixels du détecteur.

De façon plus précise, l'invention concerne un procédé de correction des défauts d'images (relatifs à des pixels en défaut ou à des pixels non-mesurés par le détecteur), issus d'un détecteur de rayons X ou γ de type matriciel, consistant en une étape de calibration du détecteur, puis en une étape de correction des pixels en défaut de l'image à corriger. Le procédé se caractérise par le fait que l'étape de calibration consiste en les opérations suivantes :

a) - acquisition d'une image noire ;

b) - acquisition d'au moins une image d'un objet connu ;

c) - détermination d'au moins une image d'offset et de gain moyen ;

d) - acquisition d'au moins une image de l'objet à mesurer avec une atténuation uniforme lorsque le détecteur est de type à rayons X et une émission uniforme lorsqu'il est de type à rayons γ ;

e) - détermination d'une première moyenne et d'un premier écart-type pour toute l'image de l'objet à mesurer ;

f) - réalisation d'une première carte de confiance en fonction du niveau de gris des pixels de l'image ainsi que de l'écart-type et de la moyenne déterminés en e) ;

et en ce que l'étape de correction consiste en l'acquisition d'une image de l'objet à mesurer et en une correction de l'image de l'objet à partir de la carte de confiance et de la dernière image de l'objet acquise.

Selon une variante de l'invention, l'étape de calibration consiste, après l'opération f) de réalisation d'une première carte de confiance, en les opérations suivantes :

g) - sur l'image de l'objet connu, détermination d'un gradient de niveau de gris (18) ;

h) - détermination (19 - 22) d'une seconde moyenne et d'un second écart-type, puis d'une seconde carte de confiance (C2) ; et

i) - détermination (24) d'une troisième carte de confiance (C3) par produit, pixel à pixel, de la première et de la seconde cartes de confiance.

Avantageusement, la première et la seconde cartes de confiance sont constituées de l'ensemble des indices de confiance attribués à chaque pixel de l'image, l'indice de confiance de chaque pixel étant déterminé en fonction du niveau de gris de ce pixel, ainsi que de l'écart-type et de la moyenne de toute l'image de l'objet à mesurer.

Selon un mode de réalisation préféré de l'invention, l'étape b) d'acquisition d'image d'un objet connu est réalisée avec une atténuation uniforme.

Selon une variante de l'invention, dans laquelle les défauts d'images résultent de l'absence de mesure sur au moins une zone de l'image, l'étape de calibration consiste, après opération f) ou l'opération i), à :

- agrandir (241) l'image de l'objet à mesurer ;

- ajouter (242), à la place de la zone de l'image sans mesure, des pixels ayant des indices de confiance nuls ; et

- déterminer (243) une quatrième carte de confiance, à partir de la première ou de la troisième carte de confiance, en tenant compte de ces indices de confiance nuls ;

et en ce que l'étape de correction consiste à effectuer une nouvelle acquisition d'image de l'objet à mesurer (244) à lui appliquer l'agrandissement et à corriger l'image de l'objet à partir de la quatrième carte de confiance et de la dernière image de l'objet acquise.

Brève description des figures

La figure 1 représente le diagramme fonctionnel du procédé de l'invention ;

la figure 2 représente la diagramme fonctionnel d'une variante de l'invention ; et

les figures 3A, 3B, 3C, 3D représentent des exemples d'images obtenues avec ou sans le procédé de l'invention.

Description détaillée de modes de réalisation de l'invention

Le procédé de l'invention a pour objet de corriger les pixels en défaut ou les pixels manquants d'images provenant d'un détecteur de rayons X ou γ de type matriciel constitué de pixels. Plus précisément, ce procédé consiste à construire une carte de confiance à partir d'indices de confiance continus, compris entre 0 et 1, et représentant le niveau de confiance attribué à chaque pixel du détecteur. Il consiste ensuite à utiliser cette carte de confiance pour corriger les défauts du détecteur matriciel en utilisant un filtrage, tel que le filtrage de KNUTSSON, décrit ultérieurement, ou un filtrage par équations aux dérivés partielles (EDP).

Selon l'invention, la détection des pixels en défaut n'est pas binaire, mais continue, ce qui permet un traitement plus précis au niveau des frontières des zones de pixels en défaut.

Le procédé de l'invention comporte deux étapes principales, à savoir :

- une étape de calibration du détecteur qui consiste à effectuer l'acquisition d'une ou plusieurs images d'un objet de référence connu ; puis à partir de ces images, à détecter les pixels en défaut, puis à déterminer la carte de confiance regroupant l'ensemble des indices de confiance de tous les pixels de l'image ;
- une étape de correction qui consiste, à partir de la carte de confiance, à corriger l'image de l'objet à mesurer au moyen d'un filtrage, tel que celui proposé par KNUTSSON.

D'une façon générale, la détection des pixels en défaut se fait grâce à l'acquisition d'une ou plusieurs images d'un objet de référence connu qui, de préférence, a une atténuation uniforme.

Dans le cas où il n'y a aucun pixel en défaut sur le détecteur, l'image obtenue est uniforme, au bruit près crée par la génération des photons X ou γ, la détection et la conversion de ces rayons X ou γ en valeurs numériques.

Dans le cas où il y a des pixels en défaut sur le détecteur, la détection de ces pixels en défaut se fait à partir d'une analyse statistique de l'image de calibration obtenue et de l'image de gradient correspondante, car un pixel en défaut a soit une valeur aberrante, soit un fort gradient. Lorsque les pixels en défaut sont détectés, on attribue à chacun de ces pixels un indice de confiance qui varie de façon continue en 0 et 1.

Le cas de détection de défauts définis par un écart à la moyenne d'une image uniforme et le cas de détection de défaut par un pixel à fort gradient pour une acquisition a priori uniforme peuvent être combinés ; la combinaison de ces deux critères se fait grâce au produit des deux cartes de confiance effectués chacune sur un critère différent.

Dans ce procédé, on fait l'hypothèse justifiée que la distribution des pixels en défaut est stable dans le temps. Les défauts vont donc être visibles sur toutes les images acquises sur le dispositif. En effet, la correction de pixels en défaut est spécifique au détecteur et non à l'image observée. Elle comble les manques d'information en utilisant au mieux les informations fournies par les pixels voisins et en assurant une continuité de l'information.

Les images ainsi corrigées sont plus facilement exploitables visuellement par un opérateur dans un objectif, notamment de diagnostic.

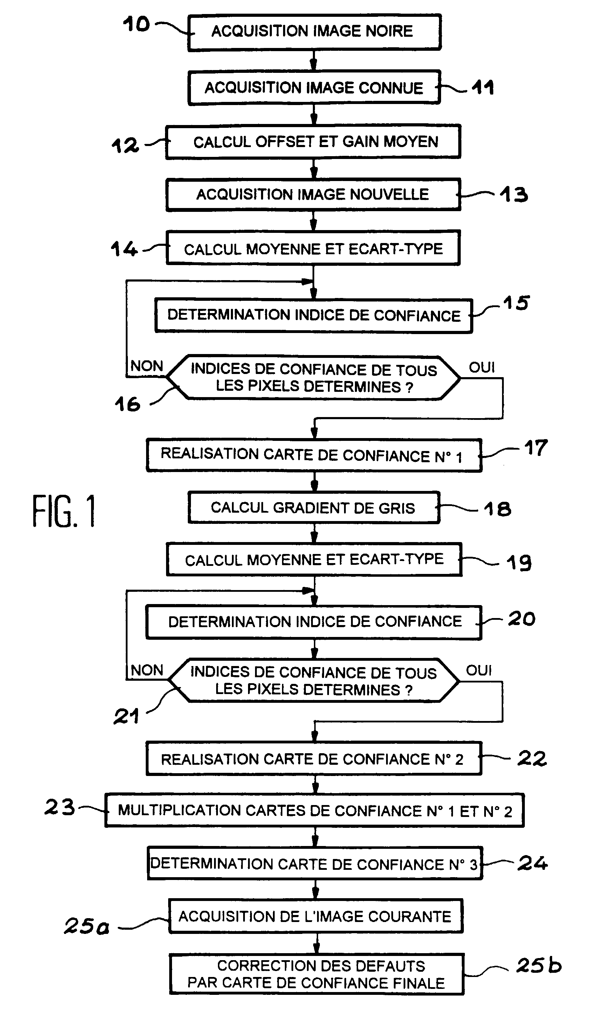

Sur la figure 1, on a représenté schématiquement le diagramme fonctionnel des étapes principales du procédé de l'invention. De façon plus précise, le procédé de l'invention comporte une étape 10 d'acquisition d'une ou de plusieurs images noires, c'est-à-dire des images effectuées dans le noir, sans émission de rayonnements X ou γ. Cette acquisition d'images noires permet de mesurer le bruit de l'électronique du dispositif de lecture associé au détecteur.

Le procédé consiste ensuite en une étape 11 d'acquisition d'une ou de plusieurs images d'un objet de référence connu. Cette acquisition d'image de référence se fait, de préférence, avec une atténuation uniforme lorsqu'il s'agit d'un détecteur à rayons X ou une émission uniforme lorsqu'il s'agit d'un détecteur à rayons γ.

L'étape suivante du procédé de l'invention, référencée 12, consiste à calculer des images d'offset et de gain moyens Moy_N et Moy_G, avec :

$$ Moy\_N = 1/n \sum_{1}^{n} Nn $$

et

$$ Moy\_G = 1/n \sum_{1}^{n} \left( Gn - Moy\_N \right) $$

où Gn représente les images de l'objet de référence connu, Nn représente les images noires, et où n est le nombre d'images acquises aussi bien dans l'étape 10 que dans l'étape 11.

Le procédé se poursuit par une étape 13 qui consiste à effectuer l'acquisition d'une image Im de l'objet à mesurer, appelée « acquisition d'image nouvelle ». Cette acquisition s'effectue pour une atténuation uniforme, dans le cas d'un détecteur de rayons X, ou pour une émission uniforme, dans le cas de rayons γ. Cette image Im est alors corrigée de l'offset et du gain de la façon suivante :

$$Im\_cor(x, y) = K.\left(\frac{Im - Moy\_N}{Moy\_G}\right)$$

où K est une constante choisie par l'utilisateur, et qui a uniquement pour but de définir la dynamique de niveau de gris pour coder la valeur des pixels de l'image corrigée.

Toutefois, la correction d'offset et de gain peut se faire selon des méthodes différentes que celle décrite précédemment et, par exemple, en utilisant une série d'objets d'atténuations différentes.

Une étape 14 consiste ensuite à déterminer l'écart-type (ou variance) et la moyenne sur l'image corrigée Im_cor. Cette moyenne et cette variance sont calculées sur l'image corrigée de l'offset. La moyenne est déterminée par :

$$Moy = 1/_{nombre\text{-}pixel} \; \Sigma_x \Sigma_y Im\_cor(x,y)$$

et la variance par :

$$Var = 1/_{nombre\_pixel} \; \Sigma_x \Sigma_y (Im\_cor(x,y) - Moy)^2.$$

Ces valeurs de moyenne et de variance peuvent éventuellement être affinées en supprimant l'effet des points aberrants. Pour cela, on recalcule la variance et la moyenne de l'image uniquement pour les pixels pour lesquels les différences de la valeur avec la moyenne Moy est inférieure d'un pourcentage x % à la racine carrée de la variance, x étant défini par l'opérateur.

Le procédé de l'invention se poursuit par une étape 15 qui consiste à déterminer l'indice de confiance de chaque pixel du détecteur. En d'autres termes, un indice de confiance compris de façon continue entre 0 et 1 est calculé pour chaque pixel de l'image en fonction de la valeur du niveau de gris du pixel, de la variance et de la moyenne déterminées pour l'image corrigée. Plus précisément, l'indice de confiance se détermine par :

- le niveau de gris du pixel, déterminé selon la normalisation des niveaux de gris de l'ensemble des pixels de façon à obtenir une distribution normale :

$$norm(x, y) = \left|\frac{Im\_cor-(x, y) - Moy}{Var}\right|$$

- la transformation de la valeur par la fonction F de répartition de la loi normale :

$$F(u) = \frac{1}{\sqrt{2p}} \int_{-\infty}^{u} e^{-y^{2/2}} \, dy$$

pour obtenir une distance dite « normale » :

$$dist\_norm(x, y) = F(norm(x, y))$$

- le calcul de l'indice de confiance du pixel :

$$CI(x, y) = 2(1 - dist\_norm(x, y)).$$

Pour un pixel dont le niveau de gris de départ est proche de la moyenne Moy, l'indice de confiance vaut 1 ;

plus la valeur du niveau de gris du pixel s'éloigne de la valeur moyenne Moy, plus l'indice de confiance se rapproche de 0.

Le procédé se poursuit par un test 16 qui consiste à vérifier si tous les indices de confiance de tous les pixels du détecteur ont bien été déterminés. Si ce n'est pas le cas, on continu la détermination des indices de confiance, à l'étape 15. Si c'est le cas, le procédé se poursuit par l'étape 17 qui consiste à réaliser une première carte de confiance C1. Cette carte de confiance regroupe tous les indices de confiance déterminés dans l'étape 15.

Le procédé se poursuit par une étape 18 qui consiste à déterminer, sur l'image initiale Im, déterminée à l'étape 13, le gradient de niveau de gris de l'image. Cette étape consiste, de façon plus précise :

- à calculer l'image de gradient grad_x(x, y) suivant la direction x de l'image corrigée en 13, par exemple par convolution de l'image Im_cor par un noyau

$$\begin{bmatrix} -1 & 0 & 1 \\ -2 & 0 & 2 \\ -1 & 0 & 1 \end{bmatrix} \; ;$$

- à calculer une image de gradient grad_y(x, y) selon la direction Y de l'image Im_cor, par exemple par convolution de l'image Im_cor par un noyau

$$\begin{bmatrix} -1 & -2 & -1 \\ 0 & 0 & 0 \\ 1 & 2 & 1 \end{bmatrix} \; ;$$

- à calculer le module du gradient à partir de l'expression :

$$\text{Mod\_grad}(x, y) = \sqrt{(\text{grad\_x}, y)^2 + (\text{grad\_y}(x, y))^2}.$$

Le procédé se poursuit par une étape 19 de calcul de la variance et de la moyenne, de l'image de gradient obtenue à l'étape 18.

La variance et la moyenne de l'image de gradient se déterminent, respectivement, par :

$$\text{Moy\_grad} = 1/\text{nombre-pixel} \; \Sigma_x \Sigma_y \, \text{Mod\_grad}(x,y)$$

$$\text{Var\_grad} = 1/\text{nombre\_pixel} \; \Sigma_x \Sigma_y \, (\text{Mod\_grad}(x, y) - \text{Moy\_grad})^2.$$

Ces valeurs de variance et de moyenne peuvent éventuellement être affinées en supprimant l'effet des points aberrants, comme cela a déjà été expliqué pour le calcul de la première variance et de la première moyenne à l'étape 14.

Le procédé de l'invention se poursuit par une étape 20) qui consiste à déterminer l'indice de confiance de chaque pixel du détecteur, à partir de son niveau de gris et des moyenne et variance déterminées sur l'image de gradient. Autrement dit, l'indice de confiance de chaque pixel est déterminé à partir de :

- la normalisation des niveaux de gris de l'ensemble des pixels, afin d'obtenir une distribution normale :

$$\text{norm\_grad}(x, y) = \left| \frac{\text{Mod\_grad}(x, y) - \text{Moy\_grad}}{\text{Var\_grad}} \right|$$

- la transformation de la valeur par la fonction F de répartition de la loi normale

$$F(u) = \frac{1}{\sqrt{2\pi}} \int_{-\infty}^{u} e^{-y^2/2} \, dy$$

pour obtenir une « distance normale » :

$$dist\_norm\_grad(x, y) = F(norm\_grad(x, y))$$

- le calcul de l'indice de confiance du pixel par :

$$C2(x, y) = 2(1 - dist\_norm\_grad(x, y)).$$

Le procédé de l'invention comporte alors un test 21 qui consiste à vérifier que l'indice de confiance de chaque pixel du détecteur a bien été déterminé. Tant que ce n'est pas le cas, l'étape 20 est réinitialisée pour chacun des pixels. Lorsque c'est le cas, le procédé se poursuit par une étape 22 qui consiste à réaliser une seconde carte de confiance C2 qui est constituée de l'ensemble de tous les indices de confiance de tous les pixels du détecteur déterminés à l'étape 20.

Le procédé se poursuit ensuite par une étape 23 qui consiste en une multiplication de la première et de la seconde cartes de confiance, de façon à obtenir une troisième carte de confiance C3 (étape 24). Ce sont les indices de confiance de cette troisième carte qui sont utilisés pour corriger les pixels en défaut de l'image de l'objet à mesurer (étape 25) ; en effet, chaque pixel en défaut est remplacé par l'indice de confiance qui lui correspond sur la carte de confiance C3. La détermination de cette troisième carte de confiance, appelée carte de confiance finale, est déterminée à partir de l'équation :

$$C\_final(x, y) = C1(x, y) \,.C2(x, y).$$

La calibration du détecteur est effectuée une seule fois. Ensuite, on peut effectuer l'acquisition de plusieurs images sur le détecteur et les corriger, sans avoir à recalibrer le détecteur.

L'étape 25 de correction consiste d'abord à effectuer l'acquisition d'une image de l'objet (25a) appelée image courante. L'étape 25b de correction de l'image peut être réalisée au moyen d'un filtrage, tel que celui proposé par KNUTSSON, en utilisant la carte de confiance finale calculée dans l'étape 24 de calibration. Ce filtrage est décrit, notamment, dans le document de H. KNUTSSON et C. WESTING, « Normalized and Differential Convolution, Method for Interpolation and Filterring of Incomplete and Uncertain Data », Proceedings CVPR 93, pp. 515-523, New York 1993.

Dans le cas le plus simple (à l'ordre 0), la méthode peut être résumée de façon suivante :

- on considère une image I qui, par exemple, est l'image acquise sur le détecteur X ;
- par ailleurs, on considère que l'on dispose d'une image de confiance C sur les pixels de l'image ;
- on peut alors construire une nouvelle image filt_I de la façon suivante :

$$filt\_I = (I.C)*a/C*a$$

où :
- « . » et « / » sont les opérateurs de multiplication et division d'image pixel à pixel ;
- « * » est l'opérateur de convolution ;
- a est le noyau de convolution suivant :

$$a = \begin{cases} r^{-\alpha}\cos^{\beta}\left(\dfrac{\pi\,r}{2\,r_{max}}\right) & \text{pour } r < r_{max} \\ 0 & \text{pour } r > r_{max} \end{cases}$$

L'image filt_I ainsi obtenue est une image pour laquelle :

- sur les zones qui ont un indice de confiance uniforme, l'effet du traitement est équivalent à un filtrage ;
- pour les pixels dont la confiance est inférieure à ses voisins, l'effet du traitement est de type « interpolation douce » avec une nouvelle valeur qui dépendra en majorité des pixels voisins de forte confiance.

La taille et la forme du noyau de convolution est à adapter à la taille (diamètre minimum) des défauts que l'on veut corriger.

Le filtrage, selon la méthode de KNUTSSON, permet de corriger les défauts d'image en utilisant au mieux l'information fournie par les pixels corrects de l'image. Par ailleurs, dans l'invention, afin d'éviter d'introduire un effet de filtrage, même sur les zones correctes où la confiance sur les pixels est bonne, le procédé de l'invention propose de combiner l'image initiale et l'image corrigée de façon à créer une nouvelle image corrigée pondérée par les indices de confiance. Cela se traduit par l'équation :

$$\text{Corr\_I} = \text{Im}.\text{C\_final} + (1 - \text{C\_final})\,.\text{filt\_I},$$

où filt_I est l'image filtrée par le procédé de KNUTSSON.

La correction des pixels en défaut à partir de la troisième carte de confiance peut être réalisée par d'autres méthodes de filtrage, comme la méthode de filtrage par équations aux dérivés partielles, décrite dans le document de R. DE RICHES et O. FAUGERAS, intitulé « Les équations aux dérivés partielles en traitement des images et vision par ordinateur », publié dans la revue « Traitement du signal », volume 13, n° 6, pages 552 à 577, Février 1996.

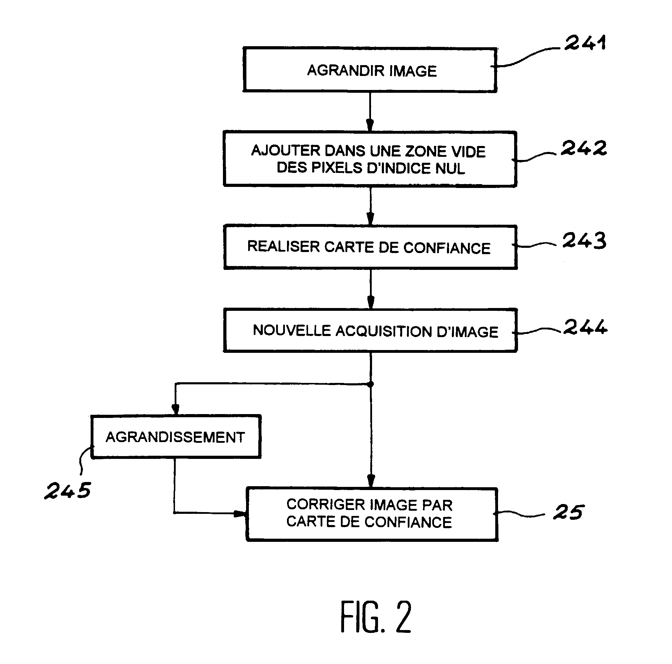

Une variante du procédé de l'invention concerne le cas où les défauts de l'image sont dus à l'absence de mesure sur une ou plusieurs zones du détecteur. Dans ce cas, le procédé de l'invention consiste à effectuer des étapes supplémentaires après l'étape 24 de détermination de la troisième carte de confiance. Ces étapes sont représentées sur la figure 2.

Dans cette variante, le procédé de l'invention comporte une étape 241 qui consiste à agrandir l'image de l'objet de façon à introduire les zones de pixels sans mesure (ou pixels manquants) où le détecteur n'a pas pu faire de mesure. En effet, l'image acquise est de plus petite taille que l'image qui aurait été acquise avec un détecteur apte à détecter sur toute sa surface. Une étape 242 consiste ensuite à ajouter, dans ces zones, des pixels d'indices de confiance nuls. Une étape 243 consiste ensuite à réaliser une quatrième carte de confiance qui prend en compte les indices de confiance nuls des pixels de la zone sans mesure. Cette quatrième carte de confiance est alors considérée comme la carte finale.

Le détecteur étant calibré, une étape 244 consiste ensuite à effectuer une nouvelle acquisition d'image de l'objet à mesurer, ou image courante. Cette dernière est agrandie (étape 245) puis corrigée. C'est à partir de cette image courante agrandie, et en appliquant la quatrième carte de confiance, que l'image est corrigée, dans l'étape 25 décrite précédemment.

En d'autres termes, cette variante consiste à introduire les zones sans information, c'est-à-dire les pixels pour lesquels le détecteur n'a pas pu faire de mesure, dans l'image de confiance finale établie à l'étape 24 ; cela se fait en augmentant la taille de l'image de confiance. Pour cela, on coupe l'image au niveau des zones manquantes et on ajoute des pixels à indices de confiance nuls pour remplir les vides de l'image.

Sur les figures 3A, 3B, 3C et 3D, on a représenté différentes images obtenues au cours du procédé de l'invention, dans le cas où l'objet à étudier est une dent.

Plus précisément, la figure 3A représente l'image obtenue lors de l'acquisition d'un objet connu d'atténuation uniforme. On voit sur cette figure qu'il y a une ligne 1 et une colonne c sans information et qu'il y a en outre quelques petites zones en formes de patatoïdes, restées sans information.

Sur la figure 3B, on a représenté la première carte de confiance C1 déterminée à partir de l'image de la figure 3A et sur laquelle on a ajouté, à la place des zones manquantes, des pixels d'indices de confiance nuls, ce qui se traduit par des zones noires.

Sur la figure 3C, on a représenté une image de dents d'une mâchoire, réalisée sans correction des défauts.

Sur la figure 3D, on a représenté cette même image, après correction des défauts par le procédé de l'invention. On voit nettement, par comparaison de ces deux figures, que les zones manquantes provenant de défauts de mesure du détecteur, telles que la ligne l et la colonne c de pixels manquants, ont quasiment, et même totalement, disparu sur la figure 3D, grâce au procédé de correction des défauts de l'invention.

**Revendications**

1. Procédé de correction de défauts d'images issues d'un détecteur de rayons X ou $\gamma$ de type matriciel, les défauts d'images étant relatifs à des pixels d'images en défaut ou à des pixels non-mesurés par le détecteur, consistant en une étape de calibration du détecteur puis en une étape de correction des pixels en défaut de l'image à corriger, caractérisé en ce que l'étape de calibration consiste en les opérations suivantes :

   a) - acquisition d'une image noire (10) ;
   b) - acquisition d'au moins une image d'un objet connu (11) ;
   c) - détermination d'au moins une image d'offset et de gain moyen (12) ;
   d) - acquisition d'au moins une image de l'objet à mesurer (13) avec une atténuation uniforme lorsque le détecteur est de type à rayons X et une émission uniforme lorsqu'il est de type à rayons $\gamma$ ;
   e) - détermination (14) d'une première moyenne et d'un premier écart type pour toute l'image de l'objet à mesurer ;
   f) - réalisation (17) d'une première carte de confiance (C1) en fonction du niveau de gris des pixels de l'image ainsi que de la moyenne et de l'écart-type déterminés en e) ;

   et en ce que l'étape de correction consiste en l'acquisition d'une image de l'objet à mesurer et en une correction de l'image de l'objet à partir de la carte de confiance et de la dernière image de l'objet acquise.

2. Procédé selon la revendication 1, caractérisé en ce que l'étape de calibration consiste, après l'opération f) de réalisation d'une première carte de confiance, en les opérations suivantes :

   g) - sur l'image de l'objet connu, détermination d'un gradient de niveau de gris (18) ;
   h) - détermination (19 - 22) d'une seconde moyenne et d'un second écart-type, puis d'une seconde carte de confiance (C2) ; et
   i) - détermination (24) d'une troisième carte de confiance (C3) par produit, pixel à pixel, de la première et de la seconde cartes de confiance.

3. Procédé selon la revendication 1 ou 2, caractérisé en ce que la première et la seconde cartes de confiance sont constituées de l'ensemble des indices de confiance attribués à chaque pixel de l'image, l'indice de confiance de chaque pixel étant déterminé en fonction du niveau de gris dudit pixel ainsi que de l'écart-type et de la moyenne de toute l'image de l'objet à mesurer.

4. Procédé selon l'une quelconque des revendications 1 à 3, caractérisé en ce que l'étape b) d'acquisition d'image d'un objet connu est réalisée avec une atténuation uniforme.

5. Procédé selon l'une quelconque des revendications 1 à 4, dans lequel les défauts d'image résultent de l'absence de mesure sur au moins une zone de l'image, caractérisé en ce que l'étape de calibration consiste, après opération f) ou l'opération i), à :

   - agrandir (241) l'image de l'objet à mesurer ;
   - ajouter (242), à la place de la zone de l'image sans mesure, des pixels ayant des indices de confiance nuls ; et
   - déterminer (243) une quatrième carte de confiance, à partir de la première ou de la troisième carte de confiance, en tenant compte de ces indices de confiance nuls ;

   et en ce que l'étape de correction consiste à effectuer une nouvelle acquisition d'image de l'objet à mesurer (244) à lui appliquer l'agrandissement et à corriger l'image de l'objet à partir de la quatrième carte de confiance et de la dernière image de l'objet acquise.

FIG. 1

```
 10 ┌─────────────────────────────┐
    │   ACQUISITION IMAGE NOIRE   │
    └─────────────────────────────┘
                  │
                  ▼
    ┌─────────────────────────────┐
    │  ACQUISITION IMAGE CONNUE   │ ─── 11
    └─────────────────────────────┘
                  │
                  ▼
 12 ┌─────────────────────────────┐
    │  CALCUL OFFSET ET GAIN MOYEN│
    └─────────────────────────────┘
                  │
                  ▼
    ┌─────────────────────────────┐
    │  ACQUISITION IMAGE NOUVELLE │ ─── 13
    └─────────────────────────────┘
                  │
                  ▼
 14 ┌─────────────────────────────┐
    │  CALCUL MOYENNE ET ECART-TYPE│
    └─────────────────────────────┘
                  │
                  ▼
    ┌─────────────────────────────┐
    │ DETERMINATION INDICE DE CONFIANCE│ ─── 15
    └─────────────────────────────┘
```

NON — INDICES DE CONFIANCE DE TOUS LES PIXELS DETERMINES ? — OUI — 16

REALISATION CARTE DE CONFIANCE N° 1 — 17

CALCUL GRADIENT DE GRIS — 18

CALCUL MOYENNE ET ECART-TYPE — 19

DETERMINATION INDICE DE CONFIANCE — 20

NON — INDICES DE CONFIANCE DE TOUS LES PIXELS DETERMINES ? — OUI — 21

REALISATION CARTE DE CONFIANCE N° 2 — 22

23 — MULTIPLICATION CARTES DE CONFIANCE N° 1 ET N° 2

DETERMINATION CARTE DE CONFIANCE N° 3 — 24

25a — ACQUISITION DE L'IMAGE COURANTE

CORRECTION DES DEFAUTS PAR CARTE DE CONFIANCE FINALE — 25b

```
                    ┌─────────────────────┐
                    │   AGRANDIR IMAGE     │────  241
                    └─────────────────────┘
                              │
                              ▼
          ┌──────────────────────────────┐
          │  AJOUTER DANS UNE ZONE VIDE   │────  242
          │   DES PIXELS D'INDICE NUL     │
          └──────────────────────────────┘
                              │
                              ▼
          ┌──────────────────────────────┐
          │   REALISER CARTE DE CONFIANCE │────  243
          └──────────────────────────────┘
                              │
                              ▼
          ┌──────────────────────────────┐
          │  NOUVELLE ACQUISITION D'IMAGE │────  244
          └──────────────────────────────┘
```

AGRANDIR IMAGE — 241

AJOUTER DANS UNE ZONE VIDE DES PIXELS D'INDICE NUL — 242

REALISER CARTE DE CONFIANCE — 243

NOUVELLE ACQUISITION D'IMAGE — 244

AGRANDISSEMENT

245

CORRIGER IMAGE PAR CARTE DE CONFIANCE — 25

FIG. 2

FIG. 3 A

FIG. 3 B

FIG. 3 C

FIG. 3 D

## RAPPORT DE RECHERCHE EUROPEENNE

**Office européen des brevets**

**Numéro de la demande**

EP 99 40 2949

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | EP 0 775 414 A (MEUNIER JEAN FRANCOIS) 28 mai 1997 (1997-05-28) * figures 15,16 * | 1-5 | H04N5/217 H04N5/32 |
| D,A | KNUTSSON H ET AL: "NORMALIZED AND DIFFERENTIAL CONVOLUTION. METHODS FOR INTERPOLATION AND FILTERING OF INCOMPLETE AND UNCERTAIN DATA" PROCEEDINGS OF THE COMPUTER SOCIETY CONFERENCE ON COMPUTER VISION A PATTERN RECOGNITION, NEW YORK, JUNE 15 - 18, 1993, 15 juin 1993 (1993-06-15), pages 515-523, XP000416338 INSTITUTE OF ELECTRICAL AND ELECTRONICS ENGINEERS * le document en entier * | 1-5 | |

**DOMAINES TECHNIQUES RECHERCHES (Int.Cl.7)**

H04N

Le présent rapport a été établi pour toutes les revendications

| Lieu de la recherche | Date d'achèvement de la recherche | Examinateur |
|---|---|---|
| LA HAYE | 22 février 2000 | De Paepe, W |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 99 40 2949

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

22-02-2000

| Document brevet cité au rapport de recherche | Date de publication | Membre(s) de la famille de brevet(s) | | Date de publication |
|---|---|---|---|---|
| EP 0775414 A | 28-05-1997 | AU | 7066394 A | 17-01-1995 |
| | | US | 5569907 A | 29-10-1996 |
| | | AT | 173369 T | 15-11-1998 |
| | | CA | 2126064 A | 18-12-1994 |
| | | WO | 9501045 A | 05-01-1995 |

Pour tout renseignement concernant cette annexe : voir Journal Officiel de l'Office européen des brevets, No.12/82